# EUROPEAN PATENT APPLICATION

(11) **EP 4 700 489 A1**
(43) Date of publication of application: **25.02.2026**
(21) Application number: 25193778.5
(22) Date of filing: 04.08.2025
(51) Int. Cl.: G03G 15/00, G03G 21/16

(54) **IMAGE FORMING APPARATUS**

(30) Priority: 22.08.2024 JP 2024140688
(71) Applicant: KYOCERA Document Solutions Inc., Osaka-shi, Osaka 540-8585 (JP)
(72) Inventor: DONG, Son Xuan, Osaka-shi, Osaka, 540-8585 (JP)
(74) Representative: Kurig, Thomas

(57) **Abstract**

An image forming apparatus (1) includes an image forming part (2), a discharge tray (5), a reading part (3), a biasing support part (20), and a turning regulating part (30). The discharge tray (5) is disposed above the image forming part (2). The reading part (3) is turnably supported on an upper portion of the image forming part (2) between a closed position and an opened position. The biasing support part (20) biases the reading part (3) from the closed position toward the opened position. The turning regulating part (20) is engaged with the reading part (3) disposed at the closed position and regulates a turning of the reading part (3), which is applied with a biasing force of the biasing support part (20), toward the opened position. When the medium is discharged from the image forming part (2) to the discharge tray (5), the turning regulating part (30) is disengaged with the reading part (3), and allows the turning of the reading part (3) toward the opened position.

## Description

### TECHNICAL FIELD

The present disclosure relates to an image forming apparatus.

### BACKGROUND

As disclosed in JP2011-19082, an image forming apparatus including an image forming part for forming an image on a recording paper (medium) and an image reading part rotatably provided on the image forming part and for reading the image is known. In this image forming apparatus, the user opens the image reading part, and then can easily take out the recording paper discharged onto the upper surface (discharge tray cover) of the image forming part.

However, the above-described technique has a problem that since the user has to manually open the image reading part, it takes time and effort to take out the recording paper (medium) from the discharge tray cover.

### SUMMARY

An image forming apparatus according to the present disclosure includes an image forming part, a discharge tray, a reading part, a biasing support part, and a turning regulating part. Then image forming part forms an image on a medium and discharges the medium on which the image is formed. The discharge tray is disposed above the image forming part, and the medium discharged from the image forming part is loaded thereon. The reading part is turnably supported on an upper portion of the image forming part between a closed position facing the discharge tray with a discharge space for the medium and an opened position opening the discharge space, and reads an image on a document in a state which the reading part is disposed at the closed position. The biasing support part is provided between the image forming part and the reading part, and biases the reading part from the closed position toward the opened position. The turning regulating part is engaged with the reading part disposed at the closed position and regulates a turning of the reading part, which is applied with a biasing force of the biasing support part, toward the opened position. When the medium is discharged from the image forming part to the discharge tray, the turning regulating part is disengaged with the reading part, and allows the turning of the reading part toward the opened position.

### BRIEF DESCRIPTION OF THE DRAWINGS

FIG. 1 is a perspective view showing an image forming apparatus according to one embodiment of the present disclosure.
FIG. 2 is a side view showing the image forming apparatus in which a reading part is closed, according to the embodiment of the present disclosure.
FIG. 3 is a side view showing the image forming apparatus in which the reading part is opened, according to the embodiment of the present disclosure.
FIG. 4 is a perspective view showing an upper portion of an image forming part of the image forming apparatus according to the embodiment of the present disclosure.
FIG. 5 is a perspective view showing a turning regulating part of the image forming apparatus according to the embodiment of the present disclosure.
FIG. 6 is a side view showing the turning regulating part of the image forming apparatus according to the embodiment of the present disclosure.
FIG. 7 is a cross-sectional view taken along the line VII-VII of FIG. 6.
FIG. 8 is a side view showing the turning regulating part in a state where a first medium detection part is disposed at a first retracted position, in the image forming apparatus according to the embodiment of the present disclosure.
FIG. 9 is a cross-sectional view taken along the line IX-IX of FIG. 8.
FIG. 10 is a cross-sectional view showing the turning regulating part in a state where an engaging part is returned to an engaging position by its own weight, in the image forming apparatus according to the embodiment of the present disclosure.
FIG. 11 is a side view showing the turning regulating part in a state where the first to second medium detection parts are disposed in the first to second retracted positions, in the image forming apparatus according to the embodiment of the present disclosure.
FIG. 12 is a cross-sectional view taken along the line XII-XII of FIG. 11.

### DETAILED DESCRIPTION

Hereinafter, with reference to the accompanying drawing, an embodiment of the present disclosure will be described below. Fr, Rr, L, R, U and D shown in the drawings indicate the front, rear, left, right, upper-and-lower. The front-and-rear direction, the left-and-right direction and the upper-and-lower direction are orthogonal to each other. Although the orientation and position terms are used herein, these terms are used for convenience of description and do not limit the technical scope of the present disclosure. In each of the figures, the dimensions, angles and the like of the members are not necessarily accurate and are schematized to explain the embodiment.

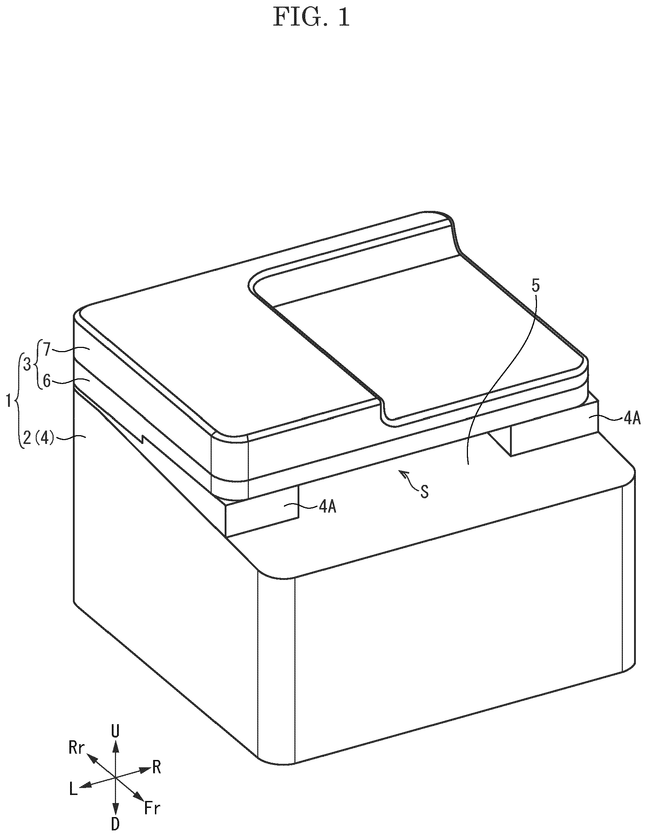

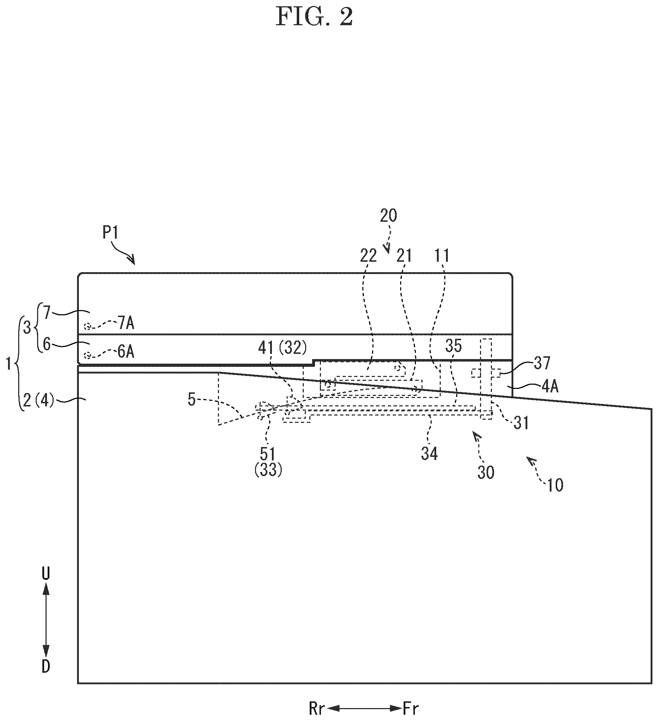

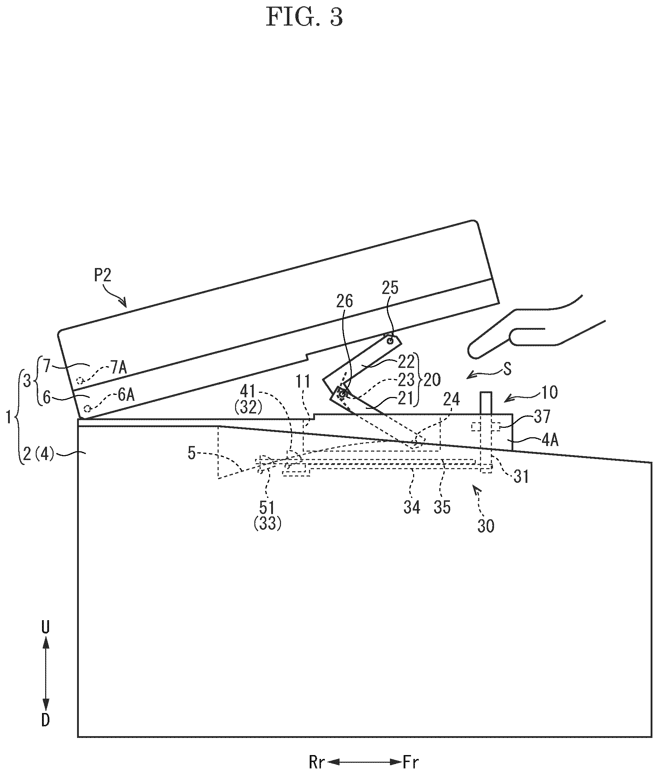

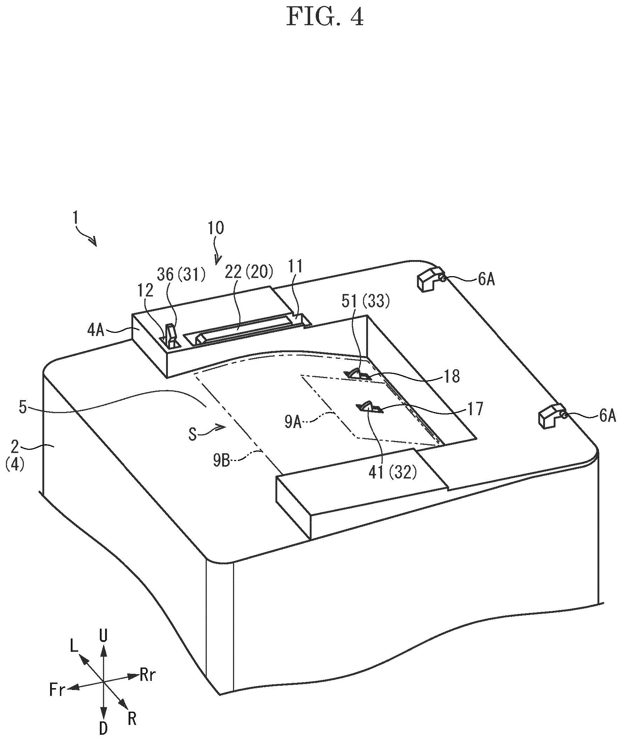

With reference to FIG. 1 to FIG. 4, an image forming apparatus 1 according to the present embodiment will be described. FIG. 1 is a perspective view showing the image forming apparatus 1. FIG. 2 is a side view showing the image forming apparatus 1 in a state where a reading part 3 is closed. FIG. 3 is a side view showing the image forming apparatus 1 in a state where the reading part 3 is opened. FIG. 4 is a perspective view showing an upper portion of an image forming part 2 of the image forming apparatus 1.

The image forming apparatus 1 includes the image forming part 2 which forms an image on a medium 9 (for example, a paper sheet or a resin sheet) and the reading part 3 which reads an image on a document (not shown) .

[Image Forming Part] As shown in FIG. 1, the image forming part 2 includes an apparatus main body 4 having a substantially rectangular parallelepiped appearance. The apparatus main body 4 includes, for example, a metal frame and a synthetic resin exterior member fixed to the frame (both not shown). The image forming part 2 includes a toner container, a photosensitive drum, a charging device, a developing device, a transfer roller, an optical scanning device, a fixing device, and the others (all of which are not shown), and forms an image on the medium 9 by an electrophotographic method. A plurality of paper feeding cassettes are detachably provided in the lower portion of the apparatus main body 4 (not shown). The medium 9 of different sizes are stored in the plurality of paper feeding cassettes. In this specification, for example, the medium 9 of a small size such as A5 size or A6 size is referred to as "the first medium 9A", the medium 9 of a relatively large size such as A4 size or legal size is referred to as "the second medium 9B", and the description common to the first medium 9A and the second medium 9B is simply referred to as "the medium 9", and only Arabic numerals are attached to the reference numerals.

A discharge tray 5 on which the image-formed medium 9 is received is provided on the upper portion of the apparatus main body 4. The discharge tray 5 has a slope (curved surface) inclined upward from the rear portion to an intermediate portion in the front-and-rear direction and then inclined gently downward from the intermediate portion to the front portion (see FIG. 2 and FIG. 4). The image forming part 2 forms an image on the medium 9 fed from the paper feeding cassette and discharges the medium 9 on which the image is formed to the discharge tray 5.

A housing protruded part 4A which supports the reading part 3 is formed integrally with the apparatus main body 4 on the upper portion of the apparatus main body 4. As shown in FIG. 4, the housing protruded part 4A protrudes upward from the upper surface of the apparatus main body 4, and is formed in a substantially U-shaped shape with the front side open when viewed from a plane. The housing protruded part 4A is provided so as to surround most of the discharge tray 5. On the front surface (vertical surface) of the rear housing protruded part 4A, a discharge opening through which the image-formed medium 9 is discharged to the discharge tray 5 is formed (not shown). Further, the first medium 9A and the second medium 9B are discharged in a state in which the centers in the left-and-right direction (lateral width) are substantially aligned with the center in the left-and-right direction of the discharge tray 5 (see FIG. 4).

The image forming part 2 may form a full-color image or a monochrome image on the medium 9. Although the image forming part 2 is a printer for forming an image by an electrophotographic method, it is not limited thereto, and may be a printer for forming an image by an inkjet method, for example. The image forming part 2 is not limited to a printer, but may be, for example, a facsimile machine or a copying machine.

[Reading Part] As shown in FIG. 1 to FIG. 3, the reading part 3 includes a reading device 6 disposed above the image forming part 2 and a document cover 7 disposed above the reading device 6. The reading device 6 optically reads the image of the document. The document cover 7 holds the document set on the reading device 6.

<Reading Device> The reading device 6 is supported via a pair of first support portions 6A (see FIG. 3) provided on the upper surface of the rear portion of the housing protruded part 4A. The reading device 6 is disposed above the housing protruded part 4A, and a discharge space S in which the medium 9 is loaded is formed between the discharge tray 5 and the reading device 6 (see FIG. 1). The reading device 6 includes a scanning part, a reflection part, an image sensor, and the others (not shown), and converts image information of the optically read document into an electric signal. The upper surface of the reading device 6 is a glass surface on which the document whose image is to be read is placed (not shown).

As shown in FIG. 2 and FIG. 3, the reading part 3 (the reading device 6 and the document cover 7) is provided above the image forming part 2 so as to be turnable between a closed position P1 and an opened position P2. The reading part 3 (the reading device 6) disposed in the closed position P1 has a substantially horizontal posture facing the discharge tray 5 with the discharge space S for the medium 9 (see FIG. 1 and FIG. 2). The reading part 3 (the reading device 6) disposed in the opened position P2 has an inclined posture where its front portion is turned up around the first support portions 6A to open the discharge space S (see FIG. 3). In principle, in the state where the reading part 3 (the reading device 6) is disposed at the closed position P1, the image forming part 2 executes image forming processing, and the reading part 3 executes image reading processing on the document.

<Document Cover> The document cover 7 is turnably supported via a pair of second support portions 7A (see FIG. 2 and FIG. 3 (only one is shown)) provided on the upper surface of the rear portion of the reading device 6. The document cover 7 covers the entire glass surface of the reading device 6 in the closed state. The document cover 7 opens the glass surface of the reading device 6 by bouncing up the front portion around the second support portions 7A. The document cover 7 is opened when the document is placed on or taken out from the glass surface of the reading device 6. When the reading device 6 reads the image of the document placed on the glass surface, the document cover 7 is closed to press the document on the glass surface.

In the above-described reading part 3, the document cover 7 is provided on the upper portion of the reading device 6 so as to be openable and closable, but the disclosure of the present disclosure is not limited thereto. For example, an automatic document conveying device having a function as the document cover 7 and a function of conveying the document to a reading position by the reading device 6 may be provided on the upper portion of the reading device 6 in an openable and closable manner (not shown).

In the image forming apparatus 1 according to the present embodiment, the reading part 3 is disposed so as to cover above the discharge tray 5, and only the front side of the discharge space S is opened (see FIG. 1). In accordance with the market demand for miniaturization of the image forming apparatus 1, in order to reduce the total height of the image forming apparatus 1, a distance between the discharge tray 5 and the reading part 3 (a height of the discharge space S) is also set to be small (short). Even when the discharge space S is set low, since the large-sized second medium 9B is exposed forward from the discharge space S or discharged near the opening of the discharge space S (see FIG. 4), the user can easily take out the medium 9 without inserting his hand deep inside the discharge space S. On the other hand, since the small-sized first medium 9A is loaded on the discharge tray 5 on the inner side (rear side) of the discharge space S (see FIG. 4), the user cannot take out the first medium 9A without inserting his hand deep inside of the discharge space S. Further, it is difficult for the user to insert his hand in the discharge space S having a low height. Therefore, the image forming apparatus 1 according to the present embodiment includes a take-out auxiliary structure 10 for opening the discharge space S (exposing the discharge tray 5) when the small-sized first medium 9A is discharged to the discharge tray 5.

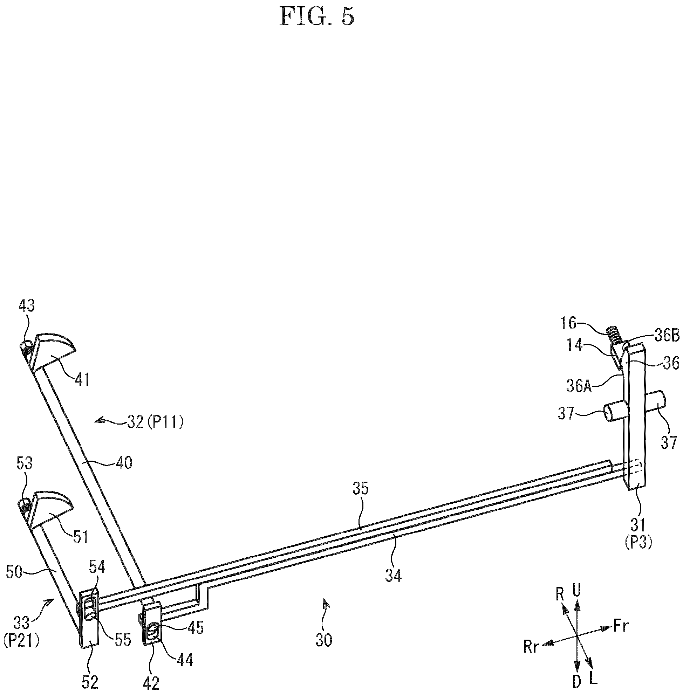

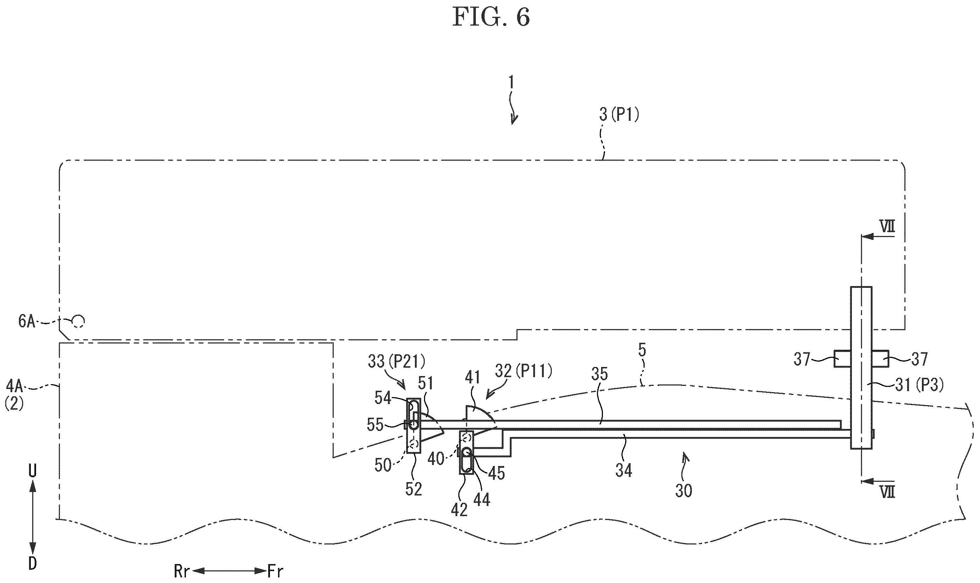

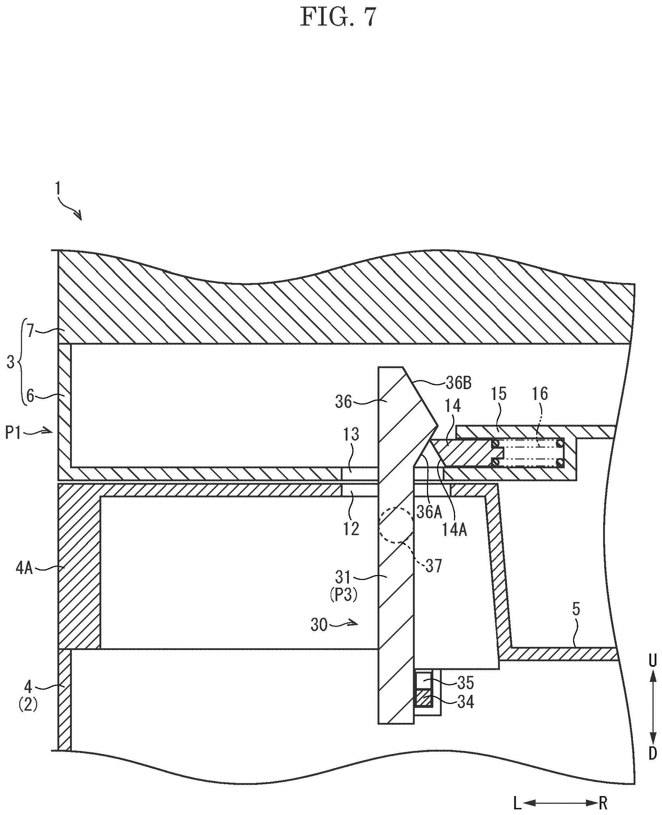

[Take-out Auxiliary Structure] As shown in FIG. 2 to FIG. 4, the take-out auxiliary structure 10 will be described. FIG. 5 is a perspective view showing a turning regulating part 30. FIG. 6 is a side view showing the turning regulating part 30. FIG. 7 is a cross-sectional view taken along the line VII-VII of FIG. 6.

As shown in FIG. 2 and FIG. 3, the take-out auxiliary structure 10 includes a biasing support part 20 and the turning regulating part 30. The biasing support part 20 biases the reading part 3 from the closed position P1 (see FIG. 2) toward the opened position P2 (see FIG. 3). The turning regulating part 30 regulates the rotation of the reading part 3 which is applied with the biasing force of the biasing support part 20.

<Biasing Support Part> As shown in FIG. 2 to FIG. 4, the biasing support part 20 is formed so as to be housed in a housing recess 11 formed in the left housing protruded part 4A, and is provided between the image forming part 2 and the reading part 3. The housing recess 11 is a substantially rectangular parallelepiped recess having an opening on the upper surface of the left housing protruded part 4A. The biasing support part 20 has a first damper arm 21, a second damper arm 22, and an opening biasing member 23.

(First to Second Damper Arms) The first damper arm 21 and the second damper arm 22 are formed in a substantially rectangular parallelepiped shape extending in the front-and-rear direction. As shown in FIG. 3, the front portion of the first damper arm 21 is turnably connected to the inner surface (housing protruded part 4A) of the housing recess 11 via a first pin 24. The front portion of the second damper arm 22 is turnably connected to the lower portion of the reading device 6 via a second pin 25. The second damper arm 22 overlaps the upper surface of the first damper arm 21 (see FIG. 2), and the rear portion of the second damper arm 22 is turnably connected to the rear portion of the first damper arm 21 via a third pin 26.

(Opening Biasing Member) The opening biasing member 23 is, for example, a torsion coil spring wound around the third pin 26, and engages two engaging arms with the first damper arm 21 and the second damper arm 22. The opening biasing member 23 biases the first damper arm 21 and the second damper arm 22 to open each other.

The first damper arm 21 and the second damper arm 22 are folded back at the third pin 26 against the biasing force of the opening biasing member 23, and are housed in the housing recess 11 in an overlapped posture (folded posture) (see FIG. 2). In this state, the upper surface of the second damper arm 22 is substantially on the same surface as the upper surface of the housing protruded part 4A, and does not interfere with the reading part 3 disposed at the closed position P1 (see FIG. 2 and FIG. 4).

The first to second damper arms 21, 22 are always applied with the biasing force from the opening biasing member 23. Therefore, unless a force for holding the first to second damper arms 21, 22 in the folded posture is applied from the outside, the first damper arm 21 is turned upward around the first pin 24, the second damper arm 22 is turned downward around the second pin 25, and the first damper arm 21 and the second damper arm 22 are turned around the third pin 26 so as to be separated from each other. The first to second damper arms 21, 22 are bent in a substantially V-shaped posture at the third pin 26, and push up the front portion of the reading part 3 (see FIG. 3). As a result, the reading part 3 is turned from the closed position P1 to the opened position P2, and the discharge space S is opened (see FIG. 3).

<Turning Regulating Part> As shown in FIG. 2, FIG. 3, and FIG. 5, the turning regulating part 30 includes an engaging part 31, a first medium detection part 32, a second medium detection part 33, a first transmission part 34, and a second transmission part 35.

(Engaging Part) As shown in FIG. 2 to FIG. 4, the engaging part 31 is provided in front of the housing recess 11 (the biasing support part 20) in the left housing protruded part 4A (the image forming part 2). The engaging part 31 is formed in a substantially rectangular parallelepiped shape extending in the upper-and-lower direction. As shown in FIG. 5, a substantially triangular prism shaped claw portion 36 protruding rightward is formed on the upper portion of the engaging part 31. As shown in FIG. 7, the claw portion 36 has a lower inclined surface 36A inclined rightward from the lower end toward the center in the upper-and-lower direction, and an upper inclined surface 36B inclined leftward from the center toward the upper end in the upper-and-lower direction.

As shown in FIG. 4, the engaging part 31 is provided so as to protrude the claw portion 36 from the upper surface of the left housing protruded part 4A. In detail, a first engagement hole 12 is opened in front of the housing recess 11 on the upper surface of the left housing protruded part 4A. As shown in FIG. 7, a second engagement hole 13, which faces the first engagement hole 12 when the reading part 3 is disposed in the closed position P1, is opened in the lower surface of the reading device 6. In a state where the reading part 3 is disposed at the closed position P1, the upper portion (the claw portion 36) of the engaging part 31 penetrates the first engagement hole 12 and the second engagement hole 13, and is disposed inside the reading device 6. In a state where the reading part 3 is disposed in the opened position P2, the upper portion (the claw portion 36) of the engaging part 31 relatively comes out of the reading part 3 and protrudes (exposes) above the upper surface of the housing protruded part 4A through the first engagement hole 12 (see FIG. 3 and FIG. 4).

As shown in FIG. 2, FIG. 3 and FIG. 5, a pair of engaging bosses 37 protrude from both front and rear side surfaces of the engaging part 31. The engaging boss 37 is formed in a substantially cylindrical shape and is provided slightly above the center of the engaging part 31 in the upper-and-lower direction. A pair of bearings (not shown) are provided inside (the top surface) of the left housing protruded part 4A, and the engaging bosses 37 of the engaging part 31 are rotatably supported by the pair of bearings. That is, the engaging part 31 is turnably provided in the housing protruded part 4A (the image forming part 2) via the pair of engaging bosses 37.

(Engaged Part) As shown in FIG. 7, an engaged part 14 is provided inside the reading device 6 (the reading part 3) so as to be engageable with the claw portion 36. The engaged part 14 is formed in a substantially rectangular parallelepiped shape extending in the left-and-right direction, and its left end surface (the tip surface) is a sliding contact inclined surface 14A inclined leftward from the lower end toward the upper end. The sliding contact inclined surface 14A is formed substantially in parallel with the upper inclined surface 36B of the engaging part 31 when the engaging part 31 is substantially stood upright. Inside the reading device 6 is provided a slide housing part 15 with the left end surface open, and the engaged part 14 is housed in the slide housing part 15 so as to be slidable in the left-and-right direction. An engaging biasing member 16 is provided between the right end surface (proximal end surface) of the engaged part 14 and the right inner surface of the slide housing part 15. The engaging biasing member 16 is, for example, a compression coil spring and biases the engaged part 14 leftward.

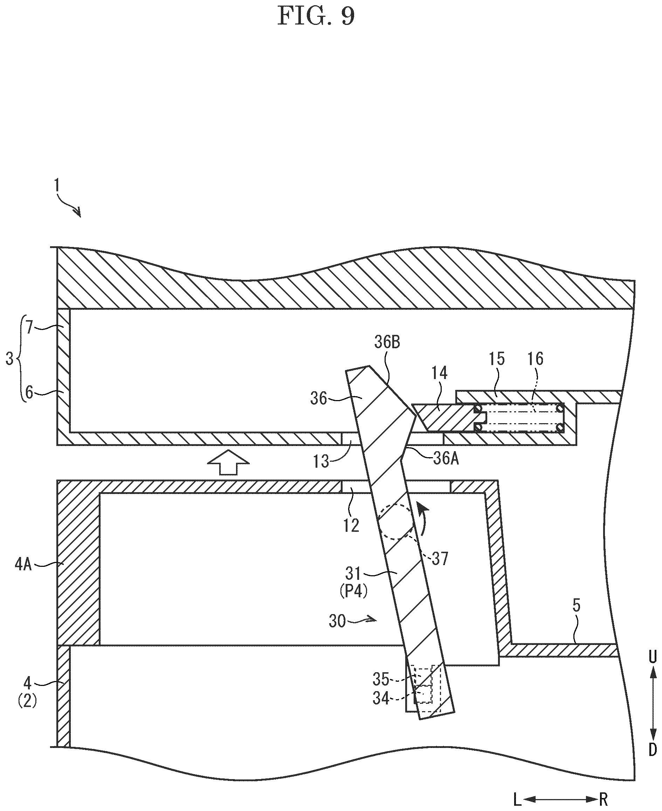

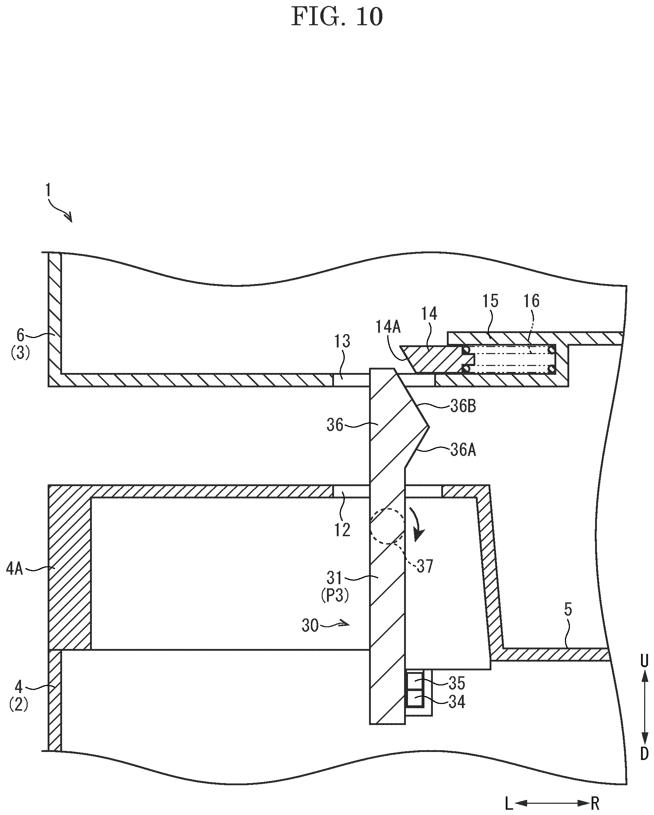

As shown in FIG. 7, in a state where the reading part 3 is disposed in the closed position P1, the claw portion 36 of the engaging part 31 penetrates the first to second engagement holes 12, 13 and is disposed on the left side of the engaged part 14. The engaged part 14 is biased by the engaging biasing member 16, and the upper left edge of the sliding contact inclined surface 14A is pressed against (engaged with) the lower inclined surface 36A of the claw portion 36. As will be described later in detail, the engaging part 31 is provided so as to be turnable between an engaging position P3 (see FIG. 7) engaging with the engaged part 14 in a substantially upright posture while the reading part 3 is disposed in the closed position P1, and a separated position P4 (see FIG. 9, which will be described later) separating from the engaged part 14 in an inclined posture. Incidentally, the engaging part 31 is stood in a substantially upright posture (a posture extending along a vertical line) in a natural state (a state in which no external force is applied), and is disposed at the engaging position P3 (see FIG. 10, which will be described later).

(First Medium Detection Part) As shown in FIG. 5 and FIG. 6, the first medium detection part 32 includes a first detection shaft 40, a first detection plate 41, a first connecting member 42, and a first returning member 43.

The first detection shaft 40 is formed, for example, in the shape of a round bar extending in the left-and-right direction, and is disposed below the discharge tray 5 at a position apart rearward from the engaging part 31. The first detection shaft 40 extends from below the left housing protruded part 4A to a position exceeding the center of the discharge tray 5 in the left-and-right direction. A plurality of bearings (not shown) are provided on the top surface (the rear surface) of the discharge tray 5, and the first detection shaft 40 is rotatably supported by these bearings.

The first detection plate 41 is formed in a substantially fan-like shape extending obliquely upward and forward (outward in the radial direction) from the right outer peripheral surface of the first detection shaft 40, for example. The first detection plate 41 is integrally formed with the first detection shaft 40. A first detection hole 17 (see FIG. 4) is opened in the rear portion of the discharge tray 5 and substantially in the center in the left-and-right direction, and the first detection plate 41 is disposed so as to be retractable through the first detection hole 17. The first detection hole 17 (the first detection plate 41) is disposed at a position where it is covered (interferes) with the first medium 9A and the second medium 9B discharged to the discharge tray 5 (see FIG. 4).

The first connecting member 42 is formed in a substantially rectangular plate shape, and is fixed to the left end portion of the first detection shaft 40. In a state where a part of the first detection plate 41 protrudes above the upper surface of the discharge tray 5, the first connecting member 42 is in a posture extending in the upper-and-lower direction, and the left end portion of the first detection shaft 40 is fixed to the upper portion of the first connecting member 42. That is, the first connecting member 42 extends downward from the fixed portion of the first detection shaft 40. The first connecting member 42 has a first elongated hole 44 extending in the upper-and-lower direction from the center to the lower in the upper-and-lower direction.

The first returning member 43 is, for example, a torsion coil spring wound around the right end portion of the first detection shaft 40, and engages the two engaging arms with the discharge tray 5 and the first detection plate 41 (see FIG. 5). The first returning member 43 biases the first detection shaft 40 and the first detection plate 41 in the counterclockwise direction when viewed from the left side.

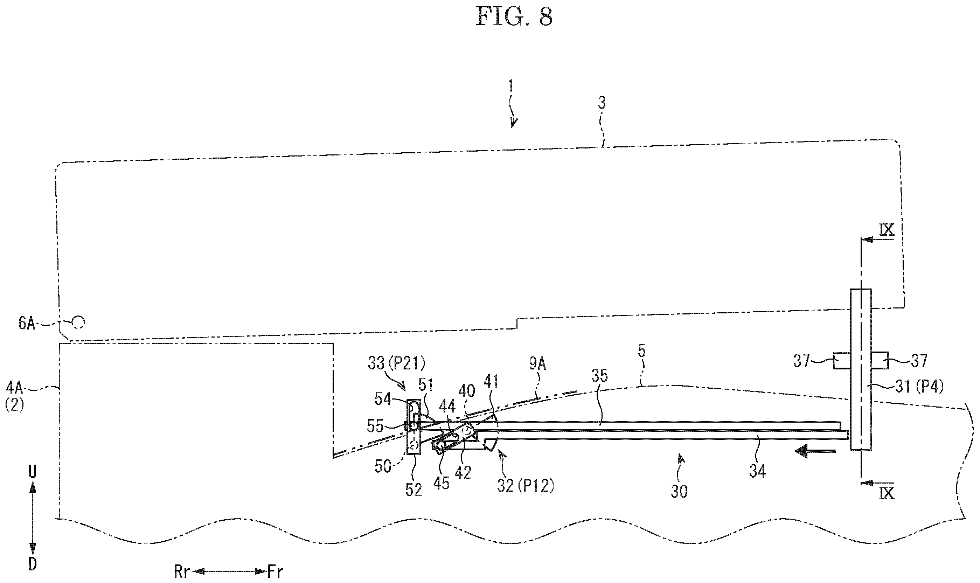

The first detection plate 41 is biased by the first returning member 43, and a part of the first detection plate 41 penetrates the first detection hole 17 and protrudes above the upper surface of the discharge tray 5 (see FIG. 4 to FIG. 6). Further, the first detection plate 41 interferes with the discharged first medium 9A or the discharged second medium 9B, turns in the clockwise direction when viewed from the left side against the biasing force of the first returning member 43, and is retracted generally below the upper surface of the discharge tray 5 (see FIG. 8, which will be described later). As described above, the first medium detection part 32 is provided so as to be turnable between a first protruding position P11 (see FIG. 6) in which a part of the first detection plate 41 is protruded above the discharge tray 5 and a first retracted position P12 (see FIG. 8) in which the first detection plate 41 pressed by the first medium 9A or the second medium 9B discharged to the discharge tray 5 is retracted in the discharge tray 5.

(Second Medium Detection Part) As shown in FIG. 5 and FIG. 6, the second medium detection part 33 includes a second detection shaft 50, a second detection plate 51, a second connecting member 52, and a second returning member 53.

The second detection shaft 50 is formed, for example, in the shape of a round bar extending in the left-and-right direction, and is disposed below the discharge tray 5. The second detection shaft 50 is disposed at a position apart rearward from the first detection shaft 40 and substantially parallel to the first detection shaft 40. The second detection shaft 50 extends from below the left housing protruded part 4A to a position shifted leftward from the center in the left-and-right direction of the discharge tray 5. That is, the second detection shaft 50 is shorter than the first detection shaft 40. The second detection shaft 50 is rotatably supported by a plurality of bearings (not shown) provided on the top surface (rear surface) of the discharge tray 5.

For example, the second detection plate 51 is formed in a substantially fan-like shape extending obliquely upward and forward (outside in the radial direction) from the right outer peripheral surface of the second detection shaft 50. The second detection plate 51 is formed integrally with the second detection shaft 50. A second detection hole 18 (see FIG. 4) is opened at the rear portion of the discharge tray 5 and near the left end portion, and the second detection plate 51 is disposed so as to be retractable through the second detection hole 18. The second detection hole 18 (the second detection plate 51) is disposed at a position where it is covered (interferes) only with the second medium 9B discharged to the discharge tray 5 (see FIG. 4). That is, the second detection hole 18 (the second detection plate 51) is not covered (does not interfere) with the first medium 9A discharged to the discharge tray 5.

The second connecting member 52 is formed in a substantially rectangular plate shape, and is fixed to the left end portion of the second detection shaft 50. In a state where a part of the second detection plate 51 protrudes above the upper surface of the discharge tray 5, the second connecting member 52 extends in the upper-and-lower direction, and the left end portion of the second detection shaft 50 is fixed to the lower portion of the second connecting member 52. That is, the second connecting member 52 extends upward from the fixed portion of the second detection shaft 50. The second connecting member 52 has a second elongated hole 54 extending in the upper-and-lower direction from the center portion to the upper portion in the upper-and-lower direction.

The second returning member 53 is, for example, a torsion coil spring wound around the right end portion of the second detection shaft 50, and engages the two engagement arms with the discharge tray 5 and the second detection plate 51 (see FIG. 5). The second returning member 53 biases the second detection shaft 50 and the second detection plate 51 in the counterclockwise direction when viewed from the left side.

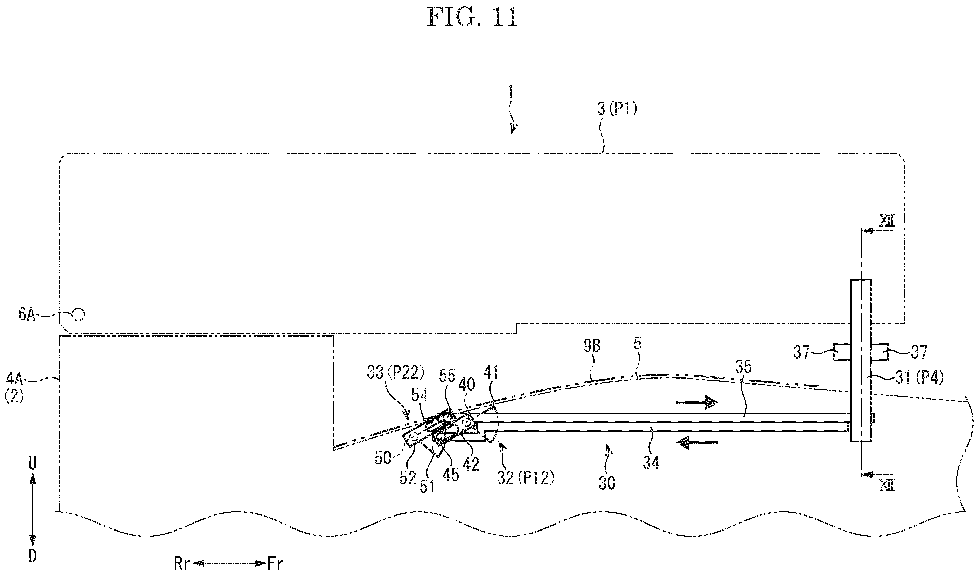

The second detection plate 51 is biased by the second returning member 53, and a part of the second detection plate 51 penetrates the second detection hole 18 and protrudes above the upper surface of the discharge tray 5 (see FIG. 4 to FIG. 6). Further, the second detection plate 51 interferes with the discharged second medium 9B, is turned in the clockwise direction when viewed from the left side against the biasing force of the second returning member 53, and is retracted generally below the upper surface of the discharge tray 5 (see FIG. 11, which will be described later). As described above, the second medium detection part 33 is provided so as to be turnable between a second protruding position P21 in which a part of the second detection plate 51 is protruded above the discharge tray 5 (see FIG. 6) and a second retracted position P22 in which the second detection plate 51 pressed only by the second medium 9B discharged to the discharge tray 5 is retracted in the discharge tray 5 (see FIG. 11).

(First Transmission Part) As shown in FIG. 5, the first transmission part 34 is formed, for example, in the shape of a square bar extending in the front-and-rear direction, and is disposed below the housing recess 11 (the biasing support part 20) (see also FIG. 2 and FIG. 3). The first transmission part 34 is formed so as to connect the lower portion of the engaging part 31 with the first detection shaft 40 (the first connecting member 42). A plurality of bearing members (not shown) are provided on the bottom (the rear surface) of the housing recess 11, and the first transmission part 34 is supported by these bearing members so as to be slidable in the front-and-rear direction.

As shown in FIG. 5, the rear portion of the first transmission part 34 is bent in a crank shape, and positioned below the other portions. On the left side surface of the rear end portion of the first transmission part 34, a first moving boss 45 in a substantially cylindrical shape protrudes. The rear portion of the first transmission part 34 is disposed on the right side of the first connecting member 42, and the first moving boss 45 is inserted into the first elongated hole 44 of the first connecting member 42 from the right side. The first moving boss 45 is slidably engaged along the first elongated hole 44. Thus, the first transmission part 34 is connected to the first medium detection part 32.

(Second Transmission Part) As shown in FIG. 5, the second transmission part 35 is formed, for example, in the shape of a square bar extending in the front-and-rear direction, and is disposed below the housing recess 11 (see also FIG. 2 and FIG. 3). The second transmission part 35 is formed in a linear shape slightly longer than the first transmission part 34, and is placed on the upper surface of the first transmission part 34. The second transmission part 35 is supported by the plurality of bearing members provided on the bottom of the housing recess 11 so as to be slidable in the front-and-rear direction together with the first transmission part 34. A substantially cylindrical second moving boss 55 protrudes from the left side surface of the rear end portion of the second transmission part 35. The rear portion of the second transmission part 35 is disposed on the right side of the second connecting member 52, and the second moving boss 55 is inserted into the second elongated hole 54 of the second connecting member 52 from the right side. The second moving boss 55 is slidably engaged along the second elongated hole 54. In this manner, the second transmission part 35 is connected to the second medium detection part 33.

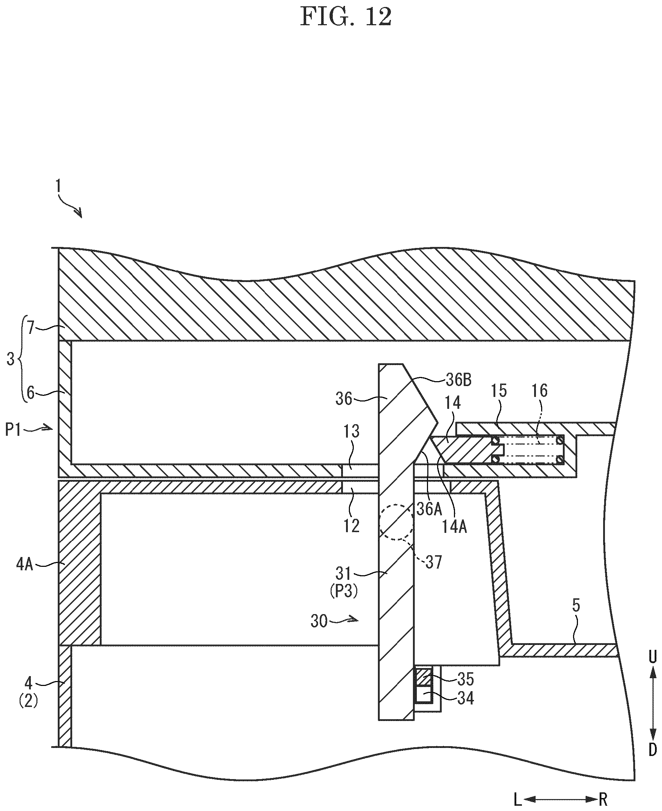

[Operation of Take-out Auxiliary Structure] Next, an operation of the take-out auxiliary structure 10 will be described with reference to FIG. 2, FIG. 3, FIG. 6 to FIG. 12. FIG. 8 is a side view showing the first medium detection part 32 disposed at the first retracted position P11. FIG. 9 is a cross-sectional view taken along the line IX-IX of FIG. 8. FIG. 10 is a cross-sectional view showing the engaging part 31 returned to the engaging position P3 by its own weight. FIG. 11 is a side view showing the first to second medium detection parts 32, 33 disposed in the first to second retracted positions P12, P22. FIG. 12 is a cross-sectional taken along the line XII-XII of FIG. 11.

<Initial State> First, the initial state before executing the image forming process will be described. As shown in FIG. 6, in the initial state, the first medium detection part 32 is disposed at the first protruding position P11, the second medium detection part 33 is disposed at the second protruding position P21, and a part of the first to second detection plates 41, 51 protrudes above the discharge tray 5. The first to second connecting members 42, 52 of the first to second medium detection parts 32, 33 are in a substantially upright standing posture, the first moving boss 45 of the first transmission part 34 is positioned at the uppermost portion of the first elongated hole 44 of the first connecting member 42, and the second moving boss 55 of the second transmission part 35 is positioned at the lowermost portion of the second elongated hole 54 of the second connecting member 52. The front portion of the first transmission part 34 intersects the lower portion of the engaging part 31 disposed at the engaging position P3. That is, the left side surface of the front portion of the first transmission part 34 is in contact with the right side surface of the lower portion of the engaging part 31. The front portion of the second transmission part 35 does not reach the lower portion of the engaging part 31, and is separated rearward from the lower portion of the engaging part 31.

As shown in FIG. 7, the reading part 3 is disposed in the closed position P1, and the claw portion 36 of the engaging part 31 brings the lower inclined surface 36A into contact with the tip portion of the engaged part 14 inside the reading device 6. In the initial state, the engaged part 14 is biased leftward by the engaging biasing member 16 and upward by the biasing support part 20 (opening biasing member 23) to press the lower inclined surface 36A of the claw portion 36 in the upper left direction. Therefore, when viewed from the front side (in FIG. 7), the engaging part 31 attempts to turn in the counterclockwise direction around the engaging boss 37. However, since the front portion of the first transmission part 34 interferes with the lower portion of the engaging part 31 (see also FIG. 6), the engaging part 31 is not turned. In this manner, in a state where the first medium detection part 32 is disposed at the first protruding position P11, the first transmission part 34 is engaged with the engaging part 31 disposed at the engaging position P3 to regulate the turning of the engaging part 31 toward the separated position P4. On the other hand, in a state where the second medium detection part 33 is disposed at the second protruding position P21, the second transmission part 35 is disengaged with the engaging part 31 (separate away rearward from the engaging part 31 (see FIG. 6)). In other words, the second transmission part 35 is in a state that allows the tuning of the engaging part 31 toward the separated position P4.

<Case where the first medium is discharged> Next, with reference to FIG. 8 to FIG. 10, a case in which the first medium 9A on which an image is formed is discharged to the discharge tray 5 will be described.

The first medium 9A fed to the discharge tray 5 comes into contact with the first detection plate 41 and is discharged while pushing the first detection plate 41 forward (see FIG. 8). The first detection plate 41 is turned forward (in the clockwise direction in FIG. 8) around the first detection shaft 40 against the biasing force of the first returning member 43, and is retracted generally below the upper surface of the discharge tray 5. The first connecting member 42 pulls the first transmission part 34 rearward while turning in the clockwise direction around the first detection shaft 40. More specifically, with the turning of the first connecting member 42, the first moving boss 45 slides from the uppermost portion toward the lowermost portion of the first elongated hole 44, and slides the first transmission part 34 rearward (see the thick arrow in FIG. 8). Since the first medium 9A is not in contact with the second detection plate 51, the second medium detection part 33 and the second transmission part 35 are maintained in the initial state.

In the above state, as shown in FIG. 8, the first medium detection part 32 is disposed at the first retracted position P12, and the first connecting member 42 is inclined downward from the front side to the rear side. The first moving boss 45 of the first transmission part 34 is positioned at the lowermost (rearmost) portion of the first elongated hole 44 of the first connecting member 42, and the front portion of the first transmission part 34 is separated rearward from the lower portion of the engaging part 31. That is, in the state where the first medium detection part 32 is disposed at the first retracted position P12, the first transmission part 34 is disengaged with the engaging part 31 (its lower portion) and allows the turning of the engaging part 31 toward the separated position P4. Since the engaging part is applied with the biasing force of the engaging biasing member 16 and the biasing support part 20 (opening biasing member 23) via the engaged part 14, the engaging part 31 is turned in the counterclockwise direction in FIG. 9 around the engaging boss 37. That is, as shown in FIG. 9, the engaging part 31 is turned to the separated position P4, and is in the inclined posture where the claw portion 36 is separated away from the engaged part 14.

As a result, the reading part 3 is in the unlocked state, and turned from the closed position P1 to the opened position P2 by being applied with the biasing force of the biasing support part 20 (see FIG. 3). Thus, the discharge space S is opened, and the user takes out the first medium 9A discharged onto the discharge tray 5 (see FIG. 3). In this manner, the first medium 9A is taken out from the discharge tray 5 with the reading part 3 disposed in the opened position P2.

As shown in FIG. 10, when the engaged part 14 is moved above the lower inclined surface 36A of the claw portion 36 in the process of turning the reading part 3 from the closed position P1 to the opened position P2, the engaging part 31 is turned (returns) from the separated position P4 to the engaging position P3 by its own weight. When the first medium 9A is taken out from the discharge tray 5, the first medium detection part 32 is turned (returns) to the first protruding position P11 by the biasing force of the first returning member 43 (see FIG. 6). Further, after taking out the first medium 9A, the user turns the reading part 3 disposed in the opened position P2 downward and returns it to the closed position P1 (see FIG. 2). At this time, the sliding contact inclined surface 14A of the engaged part 14 is moved downward while coming into contact with the upper inclined surface 36B of the engaging part 31, and the engaged part 14 is moved rightward against the biasing force of the engaging biasing member 16. When the reading part 3 is returned to the closed position P1, the tip portion of the engaged part 14 is engaged with the lower inclined surface 36A of the engaging part 31 (see FIG. 7). As a result, the image forming apparatus 1 returns to the initial state.

<Case where the second medium is discharged> Next, with reference to FIG. 11 and FIG. 12, a case where the second medium 9B on which the image is formed is discharged to the discharge tray 5 will be described.

The second medium 9B fed to the discharge tray 5 is in contact with the first to second detection plates 41, 51, and is discharged while pushing the first to second detection plates 41, 51 forward (see FIG. 11). The first to second detection plates 41 and 51 are turned forward (in the clockwise direction in FIG. 11) around the first to second detection shafts 40, 50 against the biasing force of the first to second returning members 43, 53, and are retracted generally below the upper surface of the discharge tray 5. As described above, the first detection shaft 40, the first detection plate 41, and the first connecting member 42 are turned integrally to slide the first transmission part 34 rearward (see FIG. 11). On the other hand, the second connecting member 52 pushes the second transmission part 35 forward while turning in the clockwise direction around the second detection shaft 50. More specifically, with the turning of the second connecting member 52, the second moving boss 55 is slid from the lowermost portion toward the uppermost portion of the second elongated hole 54, and slides the second transmission part 35 forward (see the thick arrow in FIG. 11).

As shown in FIG. 11, in the state where the first medium detection part 32 is disposed at the first retracted position P12, the first transmission part 34 is disengaged with the engaging part 31. On the other hand, the second medium detection part 33 is disposed at the second retracted position P22, and the second connecting member 52 is inclined substantially parallel to the first connecting member 42. The second moving boss 55 of the second transmission part 35 is positioned at the uppermost (frontmost) portion of the second elongated hole 54 of the second connecting member 52, and the front portion of the second transmission part 35 intersects the lower portion of the engaging part 31. That is, the second transmission part 35 is disposed so as to intersect the engaging part 31 instead of the first transmission part 34, and the left side surface of the front portion of the second transmission part 35 is in contact with the right side surface of the lower portion of the engaging part 31 (see also FIG. 12). As shown in FIG. 12, the engaging part 31 is applied with the biasing force from the biasing support part 20 and the like, but the front portion of the second transmission part 35 interferes with the lower portion of the engaging part 31, so that the engaging part 31 is not turned.

As described above, in the state where the second medium detection part 33 is disposed at the second retracted position P22, the second transmission part 35 is engaged with the engaging part 31 disposed at the engaging position P3 to regulate the turning of the engaging part 31 toward the separated position P4. That is, the reading part 3 is held in the closed position P1 (locked state) covering the discharge space S (discharge tray 5). The user takes out the second medium 9B discharged onto the discharge tray 5. In this manner, the second medium 9B is taken out from the discharge tray 5 with the reading part 3 disposed at the closed position P1. When the second medium 9B is taken out from the discharge tray 5, the first to second medium detection parts 32, 33 are turned (return) to the first to second protruding positions P11, P21 by the biasing force of the first to second returning members 43, 53.

In the image forming apparatus 1 according to the present embodiment described above, the turning regulating part 30 is engaged with the reading part 3 disposed at the closed position P1 to regulate the turning of the reading part 3, which is applied with the biasing force of the biasing support part 20, toward the opened position P2. Only when the first medium 9A is discharged to the discharge tray 5, the turning regulating part 30 is disengaged with the reading part 3 and permits the turning of the reading part 3 toward the opened position P2. According to this configuration, the reading part 3 can be turned from the closed position P1 to the opened position P2 in conjunction with the discharge of the first medium 9A. Then, the discharge space S (above the discharge tray 5) is automatically opened, so that the first medium 9A can be easily taken out from the discharge tray 5 without requiring the user any trouble. When the second medium 9B, which can be easily taken out without requiring opening the reading part 3, is discharged to the discharge tray 5, the turning regulating part 30 (the engaging part 31) can be kept engaged with the reading part 3 (the engaged part 14). As a result, since the reading part 3 is not opened when the second medium 9B is discharged to the discharge tray 5, it is possible to reduce the time required to return the reading part 3 turned to the opened position P2 to the closed position P1 after the second medium 9B is taken out.

In the image forming apparatus 1 according to the present embodiment, the turning regulating part 30 can open the reading part 3 when the first medium 9A is discharged to the discharge tray 5, and cannot open the reading part 3 when the second medium 9B is discharged to the discharge tray 5, but the present disclosure is not limited thereto. For example, the second medium detection part 33 and the second transmission part 35 may be omitted, and the turning regulating part 30 may include the engaging part 31, the first medium detection part 32, and the first transmission part 34 (first modified example: not shown). According to the image forming apparatus (turning regulating part) according to the first modified example, the turning regulating part 30 can be disengaged with the reading part 3 even when either of the first medium 9A and the second medium 9B is discharged to the discharge tray 5. That is, regardless of the size of the medium 9, the reading part 3 can be turned from the closed position P1 to the opened position P2 in conjunction with the discharge of the medium 9 to the discharge tray 5.

In the image forming apparatus 1 according to the present embodiment, the turning regulating part 30 includes the first to second detection plates 41, 51 and the others in contact with the medium 9, and mechanically (physically) detects the medium 9 on the discharge tray 5, but the present disclosure is not limited thereto. For example, a detection device (such as an optical sensor and a microswitch) provided in the discharge tray 5 may detect the medium 9 on the discharge tray 5 (second modified example: not shown). In this case, the first to second medium detection parts 32, 33 and the first to second transmission parts 34, 35 may be omitted, and a drive device (not shown) including an electric motor or the like for turning the engaging part 31 between the engaging position P3 and the separated position P4 may be provided. If the detection device detects the medium 9, the drive device may dispose the engaging part 31 at the separated position P4, and if the detection device does not detect the medium 9, the drive device may dispose the engaging part 31 in the engaging position P3.

In the image forming apparatus 1 according to the present embodiment, a part of the first to second detection plates 41 and 51 protrudes above the discharge tray 5, but this is not limited to this, and substantially all of the first to second detection plates 41 and 51 may protrude above the discharge tray 5 (not shown).

In the image forming apparatus 1 according to the present embodiment, the biasing support part 20 has a folded structure, but this is not limited thereto. It may be a piston cylinder or the like (not shown). Further, although the biasing support part 20 turns the reading part 3 around the first support portions 6A, the other biasing support part may be a lifting device for lifting and lowering the reading part 3 in a horizontal posture (not shown).

In the image forming apparatus 1 according to the present embodiment, although the take-out auxiliary structure 10 (the biasing support part 20 and the turning regulating part 30) is provided on the left housing protruded part 4A, it is not limited to this, and may be provided on the right housing protruded part 4A, or may be provided on both the left and right housing protruded part 4A (not shown). Further, for example, the biasing support part 20 may be provided on the left (or right) housing protruded part 4A, and the turning regulating part 30 may be provided on the right (or left) housing protruded part 4A (not shown).

## Claims

1. An image forming apparatus (1) comprising:
an image forming part (2) which forms an image on a medium and discharges the medium on which the image is formed;
a discharge tray (5) which is disposed above the image forming part (2) and on which the medium discharged from the image forming part (2) is loaded;
a reading part (3) which is turnably supported on an upper portion of the image forming part (2) between a closed position facing the discharge tray (5) with a discharge space for the medium and an opened position opening the discharge space, and reads an image on a document in a state which the reading part (3) is disposed at the closed position;
a biasing support part (20) which is provided between the image forming part (2) and the reading part (3), and biases the reading part (3) from the closed position toward the opened position; and
a turning regulating part (30) which is engaged with the reading part (2) disposed at the closed position and regulates a turning of the reading part (2), which is applied with a biasing force of the biasing support part (20), toward the opened position, wherein
when the medium is discharged from the image forming part (2) to the discharge tray (5), the turning regulating part (30) is disengaged with the reading part (3), and allows the turning of the reading part (3) toward the opened position.

2. The image forming apparatus (1) according to claim 1, wherein
the medium includes a first medium taken out of the discharge tray (5) in a state where the reading part (3) is disposed in the opened position, and a second medium taken out of the discharge tray (5) in a state where the reading part (3) is disposed in the closed position,
only when the first medium is discharged to the discharge tray (5), the turning regulating part (30) is disengaged with the reading part (3).

3. The image forming apparatus (1) according to claim 2, wherein
the turning regulating part (30) includes:
an engaging part (31) which is provided in the image forming part (2) and turnably supported between an engaging position engaged with an engaged part (14) provided in the reading part (3) in the state where the reading part (3) is disposed at the closed position and a separated position separated from the engaged part (14);
a first medium detection part (32) which is turnably provided between a first protruding position in which at least a part of a first detection plate (41) is protruded above the discharge tray (5) and a first retracted position in which the first detection plate (41) pushed by the first medium or the second medium discharged to the discharge tray (5) is retracted in the discharge tray (5);
a second medium detection part (33) which is tunably provided between a second protruding position in which at least a part of a second detection plate (51) is protruded above the discharge tray (5) and a second retracted position in which the second detection plate (51) pressed only by the second medium discharged to the discharge tray (5) is retracted in the discharge tray (5);
a first transmission part (34) which is connected to the first medium detection part (32) and, in a state where the first medium detection part (32) is disposed at the first protruding position, is engaged with the engaging part (31) disposed at the engaging position to regulate the turning of the engaging part (31) toward the separated position, and, in a state where the first medium detection part (32) is disposed at the first retracted position, is disengaged with the engaging part (31) and allows the turning of the engaging part (31) toward the separated position; and
a second transmission part (35) which is connected to the second medium detection part (33), in a state where the second medium detection part (33) is disposed at the second protruding position, is disengaged with the engaging part (31) and allows the turning of the engaging part (31) toward the separated position, and in a state where the second medium detection part (33) is disposed at the second protruding position, is engaged with the engaging part (31) disposed at the engaging position and regulates the turning of the engaging part (31) toward the separated position.
